(19) Europäisches Patentamt
European Patent Office
Office européen des brevets

(11) **EP 2 399 221 B1**

(12) **EUROPÄISCHE PATENTSCHRIFT**

(45) Veröffentlichungstag und Bekanntmachung des Hinweises auf die Patenterteilung:
**23.01.2013 Patentblatt 2013/04**

(21) Anmeldenummer: **10710779.9**

(22) Anmeldetag: **19.02.2010**

(51) Int Cl.:
*G06K 7/10* (2006.01)   *G06K 7/00* (2006.01)

(86) Internationale Anmeldenummer:
**PCT/EP2010/001059**

(87) Internationale Veröffentlichungsnummer:
**WO 2010/094497 (26.08.2010 Gazette 2010/34)**

(54) **VERBESSERTES KARTENLESEGERÄT FÜR KONTAKTLOS AUSLESBARE KARTEN UND VERFAHREN ZUM BETREIBEN EINES SOLCHEN KARTENLESEGERÄTS**

IMPROVED CARD READER DEVICE FOR CONTACTLESS READABLE CARDS AND METHOD FOR OPERATING SAID CARD READER DEVICE

APPAREIL DE LECTURE DE CARTES AMÉLIORÉ POUR DES CARTES LISIBLES SANS CONTACT ET PROCÉDÉ DE FONCTIONNEMENT ASSOCIÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.02.2009 DE 102009009846**

(43) Veröffentlichungstag der Anmeldung:
**28.12.2011 Patentblatt 2011/52**

(73) Patentinhaber:
• **Bundesdruckerei GmbH**
  **10969 Berlin (DE)**
• **Identive Technologies (India) PVT Ltd**
  **Thoraipakkam, Chennai 600 097 (IN)**

(72) Erfinder:
• **PETERS, Florian**
  **H2X 3K6 Montréal, QC (CA)**
• **BALASUBRAMANIAN, Duraipandianadar Velachery**
  **Chennai - 600 042 (IN)**

(74) Vertreter: **Obst, Bernhard**
**Bressel und Partner**
**Patentanwälte**
**Park Kolonnaden**
**Potsdamer Platz 10**
**10785 Berlin (DE)**

(56) Entgegenhaltungen:
**EP-A2- 1 717 964    EP-A2- 1 978 665**

**Beschreibung**

Die Erfindung betrifft ein Verfahren zum Betreiben eines Kartenlesegeräts von kontaktlos auslesbaren Karten sowie ein solches Kartenlesegerät.

Aus dem Stand der Technik sind Kartenlesegeräte und kontaktlos auslesbare Karten bekannt, die einen integrierten Schaltkreis umfassen, in dem Informationen gespeichert sind bzw. gespeichert werden können. Bei einer Art von solchen Kartenlesegeräten und kontaktlos auslesbaren Karten erzeugt das Kartenlesegerät in einem Nahbereich ein hochfrequentes Magnetfeld. Der integrierte Schaltkreis der kontaktlos auslesbaren Karte ist mit einem Empfangsschaltkreis oder einer Empfangsantenne, die in der Regel als Induktion ausgebildet ist, verbunden. Wird die kontaktlos auslesbare Karte in den Nahbereich des Kartenlesegeräts verbracht, so wird durch das hochfrequente Magnetfeld in dem Empfangsschaltkreis der kontaktlos auslesbaren Karte ein Strom induziert, der genutzt wird, um den integrierten Schaltkreis mit elektrischer Energie zu versorgen. Über eine Modulation des erzeugten hochfrequenten Magnetfelds kann das Kartenlesegerät Informationen zu der kontaktlos auslesbaren Karte, d.h. zu dem integrierten Schaltkreis dieser kontaktlos auslesbaren Karte, übertragen. Der integrierte Schaltkreis der kontaktlos auslesbaren Karte ist in der Lage, eine Last des Empfangsschaltkreises periodisch gezielt zuzuschalten, wodurch das hochfrequente Magnetfeld verändert wird. Das Kartenlesegerät ist ausgebildet, solche Veränderungen des Magnetfeldes zu erfassen und auszuwerten. Auf diese Weise ist ein Informationsaustausch von der kontaktlos auslesbaren Karte zu dem Kartenlesegerät möglich.

Eine mögliche Ausgestaltung solcher Kartenlesegeräte und kontaktlos auslesbaren Karten ist in der Norm ISO/IEC 14443 "Identification cards - contactless integrated circuit (s) cards - proximity cards" beschrieben und normiert. Im Standard werden solche kontaktlos auslesbaren Karten auch als proximity integrated circuit cards oder kurz proximity cards (PICC) bezeichnet. Basierend auf diesem Standard arbeiten auch die durch die International Civil Aviation Organization - ICAO normierten Identifikationskarten, welche beispielsweise elektronische Reisepässe, elektronische Identifikationskarten usw. umfassen. Ebenso gibt es Kreditkarten, die diesen Standard für eine Kommunikation nutzen. Karten für eine Vielzahl weiterer Anwendungen sind möglich.

In der erwähnten Norm ISO/IEC 14443 werden in dem Teil 2 "radio frequency power and signal interface" unterschiedliche Übertragungsarten beschrieben. Bei einer als Typ B bezeichneten Übertragungsart erfolgt eine Informationsübertragung von dem Kartenlesegerät zu der kontaktlos auslesbaren Karte, die sich im Nahbereich des Kartenlesegeräts befindet, indem eine Magnetfeldstärke des erzeugten Hochfrequenzmagnetfelds zwischen einer unmodulierten Magnetfeldstärke, welche mit dem Buchstaben a assoziiert wird, und einer modulierten Magnetfeldstärke, die mit einem Buchstaben b assoziiert wird, umgetastet wird. Die unmodulierte Magnetfeldstärke und die modulierte Magnetfeldstärke sind von Null verschieden. Kombinationen aus unmodulierter und modulierter Magnetfeldstärke repräsentieren die unterschiedlichen Symbole der Kommunikation, aus denen die logischen Zustände 1 und 0 abgeleitet werden. Eine Umtastung erfolgt auf einem Zeitraster, d.h. mit einer Informationsübertragungsfrequenz, die beispielsweise gemäß der Norm einem 128stel der Trägerfrequenz des Hochfrequenzmagnetfelds entspricht. Die Trägerfrequenz ist gemäß der Norm auf 13,56 MHz +/- 7 kHz festgelegt.

Um eine zuverlässige Signalübertragung zwischen dem Kartenlesegerät und der kontaktlos auslesbaren Karten zu gewährleisten, ist es erforderlich, dass die unmodulierte Magnetfeldstärke und die modulierte Magnetfeldstärke in einem vorgegebenen Verhältnis zueinander stehen. Hierfür ist in der Norm ein so genannter Modulationsindex m definiert. Dieser ergibt sich als Quotient aus der Differenz der unmodulierten Magnetfeldstärke und der modulierten Magnetfeldstärke und der Summe dieser beiden Magnetfeldstärken. Formelmäßig ausgedrückt bedeutet dies:

$$m = \frac{a - b}{a + b}.$$

Um eine zuverlässige Erkennung des Modulationssignals, d.h. der übertragenen Information, durch die kontaktlos auslesbare Karte zu gewährleisten, ist eine Vorgabe des Modulationsindexes notwendig. Gemäß dem Standard ISO/IEC 14443 soll der Modulationsindex beispielsweise zwischen 8 % und 14 % liegen. Für die von der ICAO normierten Identifikationskarten gilt sogar eine Einschränkung auf einen Wertebereich von 10 % bis 14 %. Wird der Vorgabewert für den Modulationsindex durch das Kartenlesegerät nicht eingehalten, so führt dies häufig dazu, dass eine Kommunikation mit einer kontaktlos auslesbaren Karte im Nahbereich des Kartenlesegeräts nicht erfolgreich ausgeführt werden kann. Ferner hat es sich in der Praxis gezeigt, dass ein sich tatsächlich einstellender Modulationsindex in dem Hochfrequenzmagnetfeld von äußeren Einflüssen, beispielsweise einer Temperatur, Materialien in einer Umgehung des Nahbereiches, der kontaktlos auslesbaren Karte, intrinsischen Parametern der kontaktlos auslesbaren Karte, beispielsweise von deren Empfangsschaltkreis und/oder deren integriertem Schaltkreis, d.h. Mikrochip, usw. abhängig ist.

Aus der EP 1 978 665 A2 sind ein System, ein Verfahren und ein Computerprogrammprodukt zum automatischen Anpassen des Modulationsindex einer Smartcardlesevorrichtung bekannt. Dort ist ein Verfahren beschrieben, welches ein Empfangen eines Signals der Smartcard vorsieht. Aus dem Signal wird ein Parameter bestimmt. Das Verfahren sieht vor, dass mindestens ein Übertragungsparameter unter Verwendung des zuvor bestimmten Parameters des Signals ermittelt wird. Der Übertragungsparameter wird auf eine Sendeeinrichtung des Lesegeräts angewendet, um einen angepassten Modulationsindex der Sendeeinrichtung zu erreichen.

Aus der EP 1 717 964 A2 ist eine Leistungsregelungsrückkopplung zur Optimierung der Stabilität einer drahtlosen Übertragung unabhängig von einer Entfernung zwischen einem Empfänger und einem aktiven Sender bekannt. Der Empfänger empfängt eine drahtlose Kommunikation und ermittelt eine hierdurch induzierte Spannung. Eine Rückkopplungsschleife liefert eine drahtlose Übertragung der Leistungsregelungsrückkopplung basierend auf der detektierten Spannung. Der aktive Sender erzeugt ein leistungsreguliertes Datensignal, in dem mindestens ein Maximum- und ein Minimum-Bitspannungsniveau für entsprechende logische hohe und niedrige Bits basierend auf der induzierten Spannung angepasst werden, die über die Rückkopplungsschleife empfangen ist. Ein Radiofrequenzleistungsniveau, ein Modulationsindex und/oder eine Flankensteilheit des von dem aktiven Sender gesendeten Datensignals wird gesteuert, indem mindestens die Maximum- oder die Minimum-Bitspannungsniveaus der entsprechend logischen hohen und niedrigen Bits basierend auf der Spannung angepasst werden, die in dem Empfänger während einer vorausgegangenen Kommunikation von dem aktiven Sender induziert worden ist.

Der Erfindung liegt somit das technische Problem zugrunde, ein Kartenlesegerät und ein Verfahren zum Betreiben eines Kartenlesegerätes zu schaffen, mit denen eine höhere Kommunikationszuverlässigkeit und -sicherheit geschaffen wird. Eine Kommunikationszuverlässigkeit gibt ein Maß dafür an, dass eine Kommunikation zwischen dem Kartenlesegerät und einer kontaktlos auslesbaren Karte zustande kommt, wenn sich diese im Nahbereich des Kartenlesegeräts befindet. Die Kommunikationssicherheit ist ein Maß dafür, dass die bei einer Kommunikation ausgetauschten Informationen korrekt übertragen werden.

Das technische Problem wird erfindungsgemäß durch ein Verfahren mit den Merkmalen des Patentanspruchs 1 sowie ein Kartenlesegerät mit den Merkmalen des Patentanspruchs 8 gelöst. Vorteilhafte Ausführungsformen der Erfindung ergeben sich aus den Unteransprüchen.

Der Erfindung liegt der Gedanke zugrunde, dass eine Kommunikationszuverlässigkeit und Sicherheit gesteigert werden kann, wenn der Modulationsindex des sich ausbildenden Hochfrequenzmagnetfelds bei Anwesenheit der kontaktlos auslesbaren Karte im Nahbereich des Kartenlesegeräts möglichst genau dem Vorgabewert für den Modulationsindex entspricht. Um dies zu erreichen, ist es vorgesehen, den tatsächlich im Magnetfeld herrschenden Modulationsindex zu ermitteln und abhängig von einem Vergleich des ermittelten Modulationsindexes mit einem Vorgabewert die Erzeugung des Hochfrequenzmagnetfelds nachzuregeln oder zu steuern, dass der sich in dem Hochfrequenzmagnetfeld einstellende Modulationsindex dem Vorgabewert annähert und/oder diesen erreicht.

Um den Modulationsindex ermitteln zu können, ist es notwendig, das von dem Kartenlesegerät erzeugte Hochfrequenzmagnetfeld in dem Kartenlesegerät zu erfassen. Hierfür ist eine getrennt von einer zum Erzeugen des Hochfrequenzmagnetfelds genutzten Sendeantenne oder Induktion ausgebildete Empfangsinduktion oder Empfangsantenne notwendig. Das empfangene Signal wird dann ausgewertet, um den Modulationsindex zu ermitteln.

Insbesondere wird ein Verfahren zum Betreiben eines Kartenlesegeräts vorgeschlagen, welches die Schritte umfasst: Erzeugen eines Hochfrequenzmagnetfelds in einem Nahbereich des Kartenlesegeräts, wobei eine Magnetfeldstärke des Hochfrequenzmagnetfelds gesteuert wird, um eine Kommunikation mit einer kontaktlos auslesbaren Karte auszuführen, und wobei bei einer Informationsübertragung von dem Kartenlesegerät zu einer in dem Nahbereich befindlichen kontaktlos auslesbaren Karte eine Amplitudenumtastmodulation zwischen zwei von Null verschiedenen Magnetfeldstärken, einer unmodulierten Magnetfeldstärke a und einer modulierten Magnetfeldstärke b, ausgeführt wird; Auswerten des Hochfrequenzmagnetfelds, um eine Variation des Hochfrequenzmagnetfelds durch eine in dem Nahbereich befindliche kontaktlos auslesbare Karte zu erfassen und zu analysieren. Hierbei ist vorgesehen, dass zum Auswerten des Hochfrequenzmagnetfelds mit einer von einer verwendeten Sendeantenne oder Sendeinduktion verschiedenen Empfangsinduktionen oder Empfangsantennen ein Hochfrequenzmagnetfeldsignal, das ein Maß für die Magnetfeldstärke des Hochgfrequenzmagnetfelds ist, empfangen wird und anhand des empfangenen Hochfrequenzmagnetfeldsignals ein ModulationsindeX $m_{gemessen}$, wobei der Modulationsindex m als Quotient der Differenz der unmodulierten Magnetfeldstärke a und der modulierten Magnetfeldstärke b und der Summe dieser beiden Magnetfeldstärken a, b gebildet ist (m = (a - b)/(a + b)), ermittelt wird und der ermittelte Modulationsindex $m_{gemessen}$ mit einem vorgegebenen Modulationsindex $mv_{orgabe}$ verglichen wird und die Magnetteldstärken beim Steuern der Erzeugung des Hochfrequenzmagnetfelds angepasst werden, um den ermittelten Modulationsindex $m_{gemessen}$ an den vorgegebenen Modulationsindex $m_{vorgabe}$ anzunähern.

Erfindungsgemäß wird eine gesonderte Anpasssequenz aufgeführt, in der gesteuert iterativ zwischen der unmodulierten Magnetfeldstärke a und der modulierten Magnetfeldstärke b umgetastet wird und die modulierte Magnetfeldstärke und/oder die unmodulierte Magnetfeldstärke jeweils abhängig von dem Vergleich des ermittelten Modulationsindexes $m_{gemessen}$ mit dem vorgegebenen Modulationsindex $m_{vorgabe}$ variiert werden, um die Annäherung des ermittelten Modulationsindexes $m_{gemessen}$ an den vorgegebenen Modulationsindex $m_{vorgabe}$ zu bewirken. Hierdurch wird die Möglichkeit geschaffen, zu geeigneten Zeitpunkten eine optimale Anpassung des Modulationsindexes bzw. dessen Nachregelung zu veranlassen.

Es ergibt sich, dass für die Ermittlung des Modulationsindexes jeweils nur das relative Verhältnis der Magnetfeldstärken des modulierten und unmodulierten Hochfrequenzmagnetfelds von Bedeutung ist. Immer wenn hier im Zusammenhang mit der Erfindung von einem ermitteln der Magnetfeldstärke gesprochen wird, ist somit nur das Ermitteln eines die Magnetfeldstärke repräsentierenden Wertes gemeint. Die absolute Magnetfeldstärke wird nicht benötigt.

Es versteht sich ferner für den Fachmann, dass die Magnetfeldstärke des Hochfrequenzmagnetfelds mit der Trägerfrequenz des Hochfrequenzmagnetfelds oszilliert. Das empfangene Hochfrequenzmagnetfeldsignal wiederum oszilliert mit der Frequenz des Hochfrequenzmagnetfelds. Beispielsweise ist ein Spitze-zu-Spitze-Wert der Amplitude des Hochfrequenzmagnetfeldsignals ein Maß für die Magnetfeldstärke des oszillierenden Hochfrequenzmagnetfelds. Somit kann das Hochfrequenzmagnetfeldsignal als ein Maß für die Magnetfeldstärke des Hochfrequenzmagnetfelds angesehen werden.

Ferner wird ein Kartenlesegerät für ein Kommunizieren mit einer kontaktlos auslesbaren Karte in einem Nahbereich des Kartenlesegeräts geschaffen, welches umfasst: eine steuerbare Sendeeinheit zum Erzeugen eines Hochfrequenzmagnetfelds in einem Nahbereich des Kartenlesegeräts, wobei eine Magnetfeldstärke des Hochfrequenzmagnetfelds steuerbar ist, um eine Kommunikation mit der kontaktlos auslesbaren Karte auszuführen, und wobei die Sendeeinheit ausgebildet ist, für eine Informationsübertragung von dem Kartenlesegerät zu einer in dem Nahbereich befindlichen kontaktlos auslesbaren Karte eine Amplitudenumtastmodulation zwischen zwei von Null verschiedenen Magnetfeldstärken, einer unmodulierten Magnetfeldstärke a und einer modulierten Magnetfeldstärke b, auszuführen; und eine Auswerteeinheit zum Auswerten des Hochfrequenzmagnetfelds, um eine Variation des Magnetfelds durch eine in dem Nahbereich befindliche kontaktlos auslesbare Karte zu erfassen und zu analysieren. Das Kartenlesegerät umfasst eine von einer zum Erzeugen des Hochfrequenzmagnetfelds verwendeten Sendeantenne oder Sendeinduktion verschiedene Empfangsinduktion oder Empfangsantenne zum Empfangen eines Hochfrequenzmagnetfeldsignals, das ein Maß für die Magnetfeldstärke des Hochfrequenzmagnetfelds ist, wobei die Empfangsinduktion oder Empfangsantenne mit der Auswerteeinheit verknüpft sind. Die Auswerteeinheit umfasst eine Detektionsschaltung, die einen die aktuelle empfangene Magnetfeldstärke repräsentierenden Wert ermittelt und einer Steuereinheit zuführt. Die Steuereinheit ist ausgebildet, einen Modulationsindex $m_{gemessen}$ zu ermitteln, wobei der Modulationsindex m als Quotient der Differenz der unmodulierten Magnetfeldstärke a und der modulierten Magnetfeldstärke b und der Summe dieser beiden Magnetfeldstärken a, b definiert ist ($m = (a - b)/(a + b)$). Die Steuereinheit ist ferner ausgebildet, den ermittelten Modulationsindex $m_{gemessen}$ mit einem vorgegebenen Modulationsindex $m_{vorgabe}$ zu vergleichen und die Sendeeinheit anzusteuern, um den ermittelten Modulationsindex $m_{gemessen}$ an den vorgegebenen Modulationsindex $m_{vorgabe}$ anzunähern. Assoziiert man die unmodulierte Magnetfeldstärke mit einer maximalen Magnetfeldstärke und die modulierte Magnetfeldstärke mit einer von Null verschiedenen abgesenkten Magnetfeldstärke, so wird die abgesenkte Magnetfeldstärke verringert, wenn der ermittelte Modulationsindex $m_{gemessen}$ kleiner als der Vorgabewert des Modulationsindexes $m_{vorgabe}$ ist. Entsprechend wird die modulierte Magnetfeldstärke angehoben, wenn der ermittelte Modulationsindex $m_{gemessen}$ größer als ein Vorgabewert des Modulationsindexes $m_{vorgabe}$ ist. Ferner ist die Steuereinheit erfindungsgemäß ausgebildet, eine gesonderte Anpasssequenz auszuführen, in der die Amplitude des Magnetfelds iterativ zwischen der unmodulierten Magnetfeldstärke a und der modulierten Magnetfeldstärke b umgetastet wird und die modulierte Magnetfeldstärke b und/oder die unmodulierte Magnetfeldstärke a jeweils abhängig von dem Vergleich des ermittelten Modulationsindexes $m_{gemessen}$ mit dem vorgegebenen Modulationsindex $m_{vorgabe}$ variiert werden, um die Annäherung des ermittelten Modulationsindexes $m_{gemessen}$ an den vorgegebenen Modulationsindex $m_{vorgabe}$ zu bewirken.

Eine aktuelle Magnetfeldstärke des Hochfrequenzmagnetfelds ist von Umfeldbedingungen, insbesondere einer Temperatur des Kartenlesegerätes bzw. der darin enthaltenen Elektronik und/oder einer Beschaffenheit und/oder Orientierung einer in dem Nahbereich befindlichen kontaktlos auslesbaren Karte, abhängig. Somit ist auch der Modulationsindex von diesen Umgebungsbedingungen abhängig.

Dadurch, dass der Modulationsindex so nachgeregelt wird, dass der tatsächlich im Hochfrequenzmagnetfeld existierende Modulationsindex möglichst exakt dem vorgegebenen Modulationsindex entspricht bzw. sich innerhalb eines vorgegebenen oder vorgebbaren Toleranzbereichs hierum befindet, kann sichergestellt werden, dass die kontaktlos auslesbare Karte die von dem Kartenlesegerät übertragenen Informationen zuverlässiger empfängt. Hierdurch wird sichergestellt, dass unabhängig von sich ändernden lokalen Bedingungen bzw. abweichenden intrinsischen Parametern der kontaktlos auslesbaren Karte jeweils eine Kommunikation ausgeführt werden kann. Insbesondere wird hierdurch eine Kommunikationszeit, die zum Ausführen einer Kommunikation beim Auslesen von Daten aus der kontaktlos auslesbaren Karte benötigt wird, verringert, da eine Anzahl erfolgloser Kommunikationsversuche stark reduziert wird. Insbesondere bei kontaktlos auslesbaren Karten, deren intrinsische Parameter von Normwerten abweichen oder die in Kombination mit ungünstigen Um-

ぐ

gebungsbedingungen zu einer Abweichung von der Norm führen, können aufgrund des hier vorgeschlagenen Nachregelns des Modulationsindexes Kommunikationen ausführen, die anderenfalls gegebenenfalls unmöglich wären. An Grenzabfertigungsstellen kann hierdurch eine Grenzabfertigung stark beschleunigt werden, da ein Auslesen einzelner als kontaktlos auslesbare Karten ausgebildeter Pässe zügiger erfolgt. Darüber hinaus können eine höhere Anzahl von elektronischen Ausweisdokumenten auch bei ungünstigen Umgebungsbedingungen und/oder schwankenden Umgebungsbedingungen ausgelesen werden. Hierdurch wird ein Gesamtdurchsatz eines Kontrollpunktes, der mit einem Kartenlesegerät ausgerüstet ist, gesteigert. Ferner wird eine Sicherheit der Kontrolle gesteigert, da eine Anzahl der elektronischen Ausweisdokumente, die gar nicht auslesbar sind, deutlich abgesenkt wird.

Insgesamt wird somit ein Prüfverfahren für eine Personenkontrolle beschleunigt, welches ein Auslesen von Informationen aus einer kontaktlos auslesbaren Karte mittels eines Kartenlesegeräts umfasst.

Bei einer bevorzugten Ausführungsform wird das über die Empfangsantenne oder Empfangsinduktion empfangene Hochfrequenzmagnetfeldsignal auch verwendet, um dieses einer Demodulationseinheit einer Auswerteeinheit zuzuführen, um hieraus eine Veränderung des Magnetfelds in jenen Zeitintervallen zu bestimmen, in denen die kontaktlos auslesbare Karte über eine Laständerung das Hochfrequenzmagnetfeld moduliert und hierüber eine Information zu dem Kartenlesegerät überträgt. Bei anderen Ausführungsformen wird dieses Empfangssignal für die Demodulation an der Sendeantenne oder Sendeinduktion abgegriffen, wie es derzeit im Stand der Technik üblich ist.

Vorzugsweise wird bei einigen Ausführungsformen die Kommunikation zwischen dem Kartenlesegerät und der kontaktlos auslesbaren Karte zumindest auf physikalischer Ebene gemäß der Norm ISO/IEC 14443 ausgeführt. Hierauf aufbauend können verschiedene Kommunikationsstandards umgesetzt werden.

Bei einer bevorzugten Ausführungsform ist die Steuereinheit so ausgebildet, dass sie die gesamte Kommunikation zwischen dem Kartenlesegerät und der kontaktlos auslesbaren Karte steuert. Dieses bedeutet, dass die Steuereinheit auch Programme auf hohen Kommunikationsebenen in Anlehnung an ein OSI-Modell ausführt.

Bei einer Weiterbildung der Erfindung ist vorgesehen, dass die Anpasssequenz beendet wird, wenn eine Abweichung des ermittelten Modulationsindexes $m_{gemessen}$ von dem vorgegebenen Modulationsindexes $m_{vorgabe}$ in einem Toleranzbereich liegt oder eine vorgegebene Anzahl von Iterationen ausgeführt ist. Der Toleranzbereich kann symmetrisch oder asymmetrisch um den Vorgabewert des Modulationsindexes festgelegt sein. Ein Abbruch nach einer bestimmten Anzahl von Iterationen ist vorteilhaft, da hierdurch sichergestellt wird, dass die Anpasssequenz in jedem Fall beendet wird, auch wenn aufgrund ungünstiger Umstände eine optimale Anpassung des Modulationsindexes nicht möglich ist. Auch der Toleranzbereich kann variiert werden, beispielsweise, wenn keine optimale Anpassung in wenigen Iterationsschritten erreicht ist.

Die iterative Umtastung zwischen der unmodulierten Magnetfeldstärke a und der modulierten Magnetfeldstärke b während der Anpasssequenz wird bei einer Ausführungsform mit einer Anpasssequenzumtastfrequenz vorgenommen, die von einer Frequenz abweicht, vorzugsweise um mindestens eine Größenordnung abweicht, die bei einer Umtastung zur Informationsübertragung zwischen dem Kartenlesegerät und der kontaktlos auslesbaren Karte verwendet wird. Hierdurch wird sichergestellt, dass die Amplitudenumtastung während der Anpasssequenz nicht als Informationsübertragung von dem Kartenlesegerät zu der kontaktlos auslesbaren Karte aufgefasst wird. Besonders bevorzugt ist die verwendete Anpasssequenzumtastfrequenz kleiner als eine Signalübertragungsfrequenz, d.h. eine Frequenz, mit der einzelne Bits von dem Kartenlesegerät zu der kontaktlos auslesbaren Karte übertragen werden.

Bei einer Ausführungsform wird die Anpasssequenz während einer Übertragung von Informationen zwischen dem Kartenlesegerät und der kontaktlos auslesbaren Karte ausgeführt, wobei die Informationsübertragung hierfür unterbrochen wird. Hierdurch kann sichergestellt werden, dass bei länger andauernden Kommunikationsvorgängen der Modulationsindex jeweils optimal nachgeregelt wird, auch wenn sich die Umgebungsbedingungen beispielsweise durch eine Veränderung des Abstands der kontaktlos auslesbaren Karte von dem Kartenlesegerät in dem Nahbereich verändert hat.

Um auszuschließen, dass die kontaktlos auslesbare Karte möglicherweise die Umtastung der Magnetfeldstärke während einer Anpasssequenz als Informationsübertragung interpretiert und hierauf versucht zu antworten, wird die Anpasssequenz bei einer Ausführungsform unmittelbar vor einem Abschalten des Hochfrequenzmagnetfelds ausgeführt. Eine solche Abschaltung des Hochfrequenzmagnetfelds wird durch Kartenlesegeräte in der Regel in regelmäßigen Abständen, insbesondere nach erfolglosen Pollingsequenzen, ausgeführt, um sicherzustellen, dass eine im Nahbereich befindliche kontaktlos auslesbare Karte bzw. dessen darin enthaltener Mikrochip stromlos geschaltet wird und hierdurch in einen definierten Zustand zurückgesetzt wird. Daher wird bei einigen Ausführungsformen die Anpasssequenz nur oder zumindest auch nach erfolglosen Pollingsequenzen vor einem Abschalten des Hochfrequenzmagnetfelds ausgeführt. Hierdurch wird sichergestellt, dass der Modulationsindex optimiert nachgeregelt wird, so dass nach einem Zurücksetzen des Mikroprozessors in der kontaktlos auslesbaren Karte am Beginn einer nachfolgenden Pollingsequenz ein optimales Modulationsverhältnis gegeben ist, so dass eine Wahrscheinlichkeit für eine erfolgreiche Kommunikation zwischen dem Kartenlesegerät und der kontaktlos auslesbaren Karte deutlich gesteigert wird.

Ebenso ist es vorteilhaft, eine Anpasssequenz nach einer Prüfung auszuführen, mit der überprüft wird, ob sich die kontaktlos auslesbare Karte nach wie vor im Nahbereich befindet, wenn beispielsweise in einem Kommunikationsvorgang für ein gewisses Zeitintervall keine Informationen zwischen dem Kartenlesegerät und der kontaktlos auslesbaren Karte ausgetauscht wurden, und diese Anpasssequenz auszuführen, bevor der Informationsaustausch fortgesetzt wird. Hierdurch wird für den nachfolgenden Informationstausch der Modulationsindex wieder optimiert nachgeregelt. Wird beispielsweise im nachfolgenden Informationstausch eine größere Datenmenge aus der kontaktlos auslesbaren Karte ausgelesen, so kann hierüber sichergestellt werden, dass dieses Auslesen mit einer höheren Wahrscheinlichkeit vollständig und korrekt ausgeführt wird und nicht erneut durchgeführt werden muss, was der Fall wäre, wenn der Modulationsindex nicht optimal ist und hierdurch eine Fehlübertragung oder ein Übertragungsabbruch zustande kämen.

Die Auswerteeinheit eines bevorzugten Kartenlesegeräts umfasst eine Messschaltung zum Ermitteln von die empfangenen Magnetfeldstärken repräsentierenden Werten $a_{gemessen}$, $b_{gemessen}$ zur Berechnung des gemessenen Modulationsindexes $m_{gemessen}$, wobei die Messschaltung die die Magnetfeldstärken repräsentierenden Werte $a_{gemessen}$, $b_{gemessen}$ aus dem empfangenen Hochfrequenzmagnetfeldsignal bestimmt, so dass diese eine zeitlich gemittelte Magnetfeldstärke repräsentieren.

Bei einer bevorzugten Ausführungsform umfasst die Messschaltung eine Detektionsschaltung mit einem nachgeschalteten Analog-Digitalwandler, wobei die Detektionsschaltung eine Tiefpassschaltung zum Ermitteln eines Effektivwerts, insbesondere eines quadratischen Mittelwerts, umfasst. Eine Mittelung ist notwendig, da das Hochfrequenzmagnetfeldsignal fortwährend mit der Hochfrequenz des Hochfrequenzmagnetfelds oszilliert. Eine zeitliche Mittelung liefert ein Maß für eine Einhüllende des Hochfrequenzmagnetfeldsignals, welches wiederum die Amplitude der Magnetfeldstärke repräsentiert, mit der das Hochfrequenzmagnetfeld oszilliert.

Über den Analog-Digitalwandler wird der so ermittelte Amplitudenwert digitalisiert und der Steuereinrichtung bereitgestellt, die die gesteuerte Sendeeinheit entsprechend steuert, um die Magnetfeldstärken anzupassen.

Als besonders vorteilhaft hat es sich erwiesen, die Messschaltung so auszubilden, dass sie positive und negative Halbwellen des empfangenen Hochfrequenzmagnetfeldsignals getrennt auswertet. In der Steuereinheit können dann die für die negativen und positiven Halbwellen ermittelten Magnetfeldstärken ausgewertet werden. Hierdurch wird man von einem Gleichtaktanteil in dem gemessenen Hochfrequenzmagnetfeldsignal unabhängig.

Bei einer bevorzugten Ausführungsform eines Kartenlesegeräts ist eine Modulationsschaltung der Sendeeinheit mit einer Demodulationsschaltung der Auswerteinheit in einem integrierten steuerbaren Schaltkreis integriert, wobei die erzeugten Magnetfeldstärken über Registerwerte für Ausgangswiderstände steuerbar sind, die über Steuerbefehle der Steuereinheit einstellbar sind. Eine solche integrierte Schaltung führt somit die Modulation und Demodulation für die Kommunikation von dem Kartenlesegerät zu der kontaktlos auslesbaren Karte sowie von der kontaktlos auslesbaren Karte zu dem Kartenlesegerät aus. Gesteuert wird diese Kommunikation durch die Steuereinheit, die einerseits die Informationen und die hierbei verwendeten Magnetfeldstärken für eine Übertragung zu der kontaktlos auslesbaren Karte festlegt und andererseits die empfangenen Informationen, die aus der Demodulation gewonnen werden, auswertet.

Nachfolgend wird die Erfindung unter Bezugnahme auf eine Zeichnung näher erläutert. Hierbei zeigen:

Fig. 1 eine schematische Darstellung einer Ausführungsform eines Kartenlesegeräts;

Fig. 2 ein schematisches Ablaufdiagramm einer Anpasssequenz;

Fig. 3 eine schematische Ansicht einer Visualisierung einer gemessenen Magnetfeldstärke; und

Fig. 4 eine schematische Darstellung einer Messschaltung.

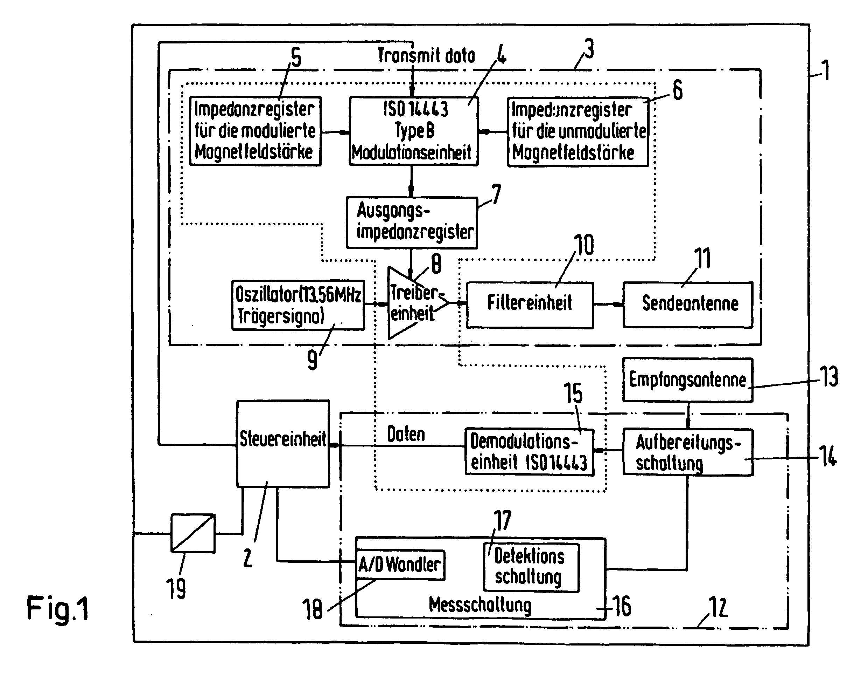

In Fig. 1 ist schematisch ein Kartenlesegerät 1 dargestellt. Das Kartenlesegerät 1 umfasst eine Steuereinheit 2, die eine Funktionsweise des Kartenlesegeräts 1 steuert. Die Steuereinheit 2 umfasst in der Regel einen Mikroprozessor, einen Speicher sowie darin abgelegte Software, die auf dem Mikroprozessor ausführbar ist. Diese Unterkomponenten der Steuereinheit 2 sind aus Gründen der Vereinfachung nicht dargestellt. Die Steuereinheit ist ausgebildet, eine Sendeeinheit 3, welche durch eine Strichpunktlinie dargestellt ist, zu steuern. Die Sendeeinheit 3 ist so ausgebildet, dass diese ein Hochfrequenzmagnetfeld in einem Nahbereich des Kartenlesegeräts 1 erzeugen kann. Ferner ist die Sendeeinheit 3 so ausgebildet, dass sie gesteuert durch die Steuereinheit 2 eine Amplitudenumtastmodulation der Magnetfeldstärke zum Übertragen von Informationen ausführen kann. Die Sendeeinheit 2 umfasst hierfür eine Modulationseinheit 4. Die Modulationseinheit 4 ist vorzugsweise so ausgebildet, dass diese eine Modulation des Signals gemäß der Norm ISO/IEC 14443 Typ B ausführen kann. Die Modulationseinheit 4 kann bei einigen Ausführungsformen auch so ausgebildet sein, dass sie gesteuert durch die Steuereinheit 2 auch andere Modulationsverfahren ausführen kann. Um eine unmodulierte Magnetfeldstärke a und eine modulierte Magnetfeldstärke b beeinflussen zu können, sind bei der dargestellten Ausführungsform ein Impedanzregister für die modulierte Magnetfeldstärke 5 und ein Impedanzregister für die unmodulierte Magnetfeldstärke 6 vorgesehen. Über die Werte, die über die Steuereinheit 2 festgelegt werden können, wird durch die Modulationseinheit 4 entsprechend der Modulation ein Wert eines Ausgangsimpedanzregisters 7 gesetzt. Der Wert des Ausgangsimpedanzregisters 7 legt die Ausgangsimpedanz einer Treibereinheit 8 fest. Diese verstärkt ein Signal eines Oszillators 9, der mit einer Trägerfrequenz, beispielsweise 13,56 MHz schwingt, und erzeugt ein Sendesignal. Das Sendesignal wird über eine Filtereinheit 10 auf eine Sendeantenne 11 gegeben. Die Sendeantenne 11 ist vorzugsweise als Sendeinduktion mit einer Leiterschleife ausgebildet.

Im Stand der Technik wird an der Sendeantenne über eine Aufbereitungsschaltung zusätzlich ein Empfangssignal abgegriffen, über das eine Variation des erzeugten Hochfrequenzmagnetfelds durch eine kontaktlos auslesbare Karte (nicht dargestellt) im Nahbereich des Kartenlesegeräts während einer Informationsübertragung von der kontaktlos auslesbaren Karten zu dem Kartenlesegerät erfasst werden kann.

Bei der hier dargestellten Ausführungsform ist eine Auswerteeinheit 12 vorgesehen, welche durch eine Strich-Doppelpunkt-Linie dargestellt ist. Die Auswerteeinheit 12 ist mit einer Empfangsantenne 13 gekoppelt, welche vorzugsweise als Empfangsinduktion mit einer Leiterschleife ausgebildet ist. Das durch das Hochfrequenzmagnetfeld, welches von der Sendeeinheit 3 erzeugt ist, induzierte Hochfrequenzmagnetfeldsignal wird über eine Aufbereitungsschaltung 14 der Auswerteeinheit 12 für eine weitere Verarbeitung aufbereitet. Dieses empfangene Hochfrequenzmagnetfeldsignal kann einerseits einer Demodulationseinheit 15 zugeführt werden, die eine Demodulation gemäß dem Standard ISO/IEC 14443 Typ B vornimmt und die erhaltenen Informationen in Form von Daten an die Steuereinheit ausgibt. Zusätzlich wird das aufbereitete empfangene Hochfrequenzmagnetfeldsignal einer Messschaltung 16 zugeführt, die jeweils eine aktuelle Magnetfeldstärke des Hochfrequenzmagnetfelds repräsentierende Werte ermittelt. Es versteht sich für den Fachmann, dass die Magnetfeldstärke des Hochfrequenzmagnetfelds mit der Trägerfrequenz des Hochfrequenzmagnetfelds oszilliert. Das Hochfrequenzmagnetfeldsignal wiederum oszilliert mit der Frequenz des Hochfrequenzmagnetfelds. Ein Spitze-zu-Spitze-Wert der Amplitude des Hochfrequenzmagnetfeldsignals ist ein Maß für die Magnetfeldstärke des Hochfrequenzmagnetfelds. Somit kann das Hochfrequenzmagnetfeldsignal als ein Maß für die Magnetfeldstärke des Hochfrequenzmagnetfelds angesehen werden. Die Messschaltung 16 ermittelt jeweils einen aktuellen die Magnetfeldstärke repräsentierenden Wert anhand des Hochfrequenzmagnetfeldsignals. Hierzu wird die Spannung des empfangenen Hochfrequenzmagnetfeldsignals analysiert. Da eine Amplitudenumtastung mit einer Frequenz vorgenommen wird, die geringer als die Trägerfrequenz des Hochfrequenzmagnetfelds ist, kann die Magnetfeldstärke durch eine zeitliche Mittelung einer oder mehrerer Halbwellen des induzierten Magnetfeldsignals ermittelt werden. Wie weiter unten erläutert wird, ist es vorteilhaft, die positiven und negativen Halbwellen jeweils beide getrennt auszuwerten. In einer Detektionsschaltung 17 wird beispielsweise eine solche Mittelung ausgeführt. Diese Schaltung ist vorzugsweise als analoge Schaltung ausgebildet. Ein nachgeschalteter Analog-Digitalwandler 18 stellt die Werte für die ermittelten Magnetfeldstärken für die Steuereinheit 2 bereit. Diese ist ausgebildet, anhand der empfangenen Werte einen gemessenen Modulationsindex aus den Werten zu bestimmen, die gemessen wurden, während das Hochfrequenzmagnetfeld unmoduliert und moduliert ist. Der ermittelte Modulationsindex $m_{gemessen}$ wird mit einem vorgegebenen Modulationsindex $m_{vorgabe}$ verglichen. Der Vergleich wird vorteilhafterweise so ausgeführt, dass überprüft wird, ob der gemessene Modulationsindex $m_{gemessen}$ in einem Toleranzbereich um den vorgegebenen Modulationsindex liegt. Dieser Toleranzbereich kann, muss jedoch nicht, symmetrisch ausgebildet sein. Liegt der ermittelte Modulationsindex nicht innerhalb des Toleranzbereichs um den vorgegebenen Modulationsindex, so ändert die Steuereinheit 2 die Vorgabewerte in dem Impedanzregister für die modulierte Magnetfeldstärke 5 und/oder im Impedanzregister für die unmodulierte Magnetfeldstärke 6.

Die Vorgabewerte für den Modulationsindex sowie für die Begrenzungswerte des Toleranzbereichs $\delta t_1$, $\delta t_2$ können fest vorgegeben sein oder bei einigen Ausführungsformen über eine Schnittstelle 19 erfasst bzw. eingegeben werden. Über die Schnittstelle 19 können ebenfalls Daten, die zu der kontaktlos auslesbaren Karte übertragen werden sollen oder von dieser empfangen worden sind, ausgetauscht werden. Bei der Schnittstelle 19 kann es sich um eine Kommunikationsschnittstelle oder eine Benutzerschnittstelle, die beispielsweise in Form eines Terminals, eines Touchscreens mit einer grafischen Benutzeroberfläche usw. handeln.

Durch geeignete Wahl der Messschaltung 16 bzw. Detektionsschaltung 17 kann erreicht werden, dass der Modulationsindex während eines Kommunikationsprozesses, bei dem Daten zu der kontaktlos auslesbaren Karte übertragen werden, nachgeregelt bzw. gesteuert wird. Bei anderen Ausführungsformen ist jedoch vorgesehen, dass alternativ oder zusätzlich eine Anpasssequenz ausgeführt wird.

Bei bevorzugten Ausführungsformen wird die Modulation und Demodulation sowie die Signalerzeugung für ein Sendesignal in einem integrierten Chip 20 ausgeführt. Dieser ist durch eine gepunktete Linie angedeutet. Bei anderen Ausführungsformen kann auch die Messschaltung 17 mit in den Chip 20 integriert werden. In einem solchen Fall kann die Funktionalität des Nachregelns des Modulationsindexes auch von der Steuereinheit auf den Chip übertragen werden. Bei anderen Ausführungsformen wird das Signal für die Demodulation nicht an der Empfangsantenne, sondern an der Transmissionsantenne abgegriffen. Hierfür kann eine gesonderte Aufbereitungsschaltung vorgesehen sein. Bei wieder anderen Ausführungsformen kann die Aufbereitungsschaltung 14 zwischen der Empfangsantenne 13 und der Messschaltung 16 und/oder der Demodulationseinheit 15 entfallen.

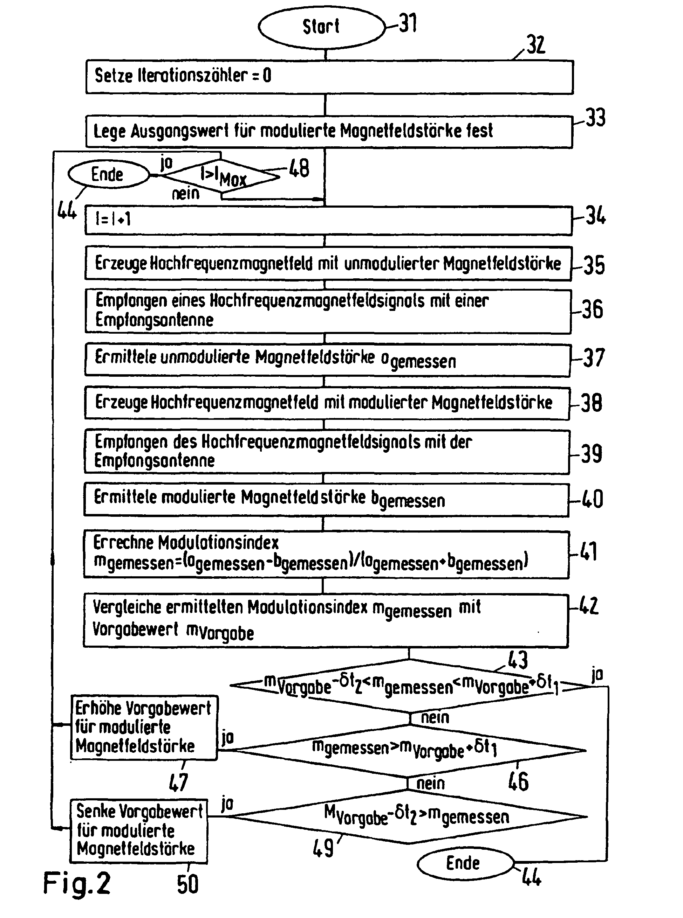

In Fig. 2 ist ein schematisches Ablaufdiagramm einer möglichen Ausführungsform einer Anpasssequenz dargestellt. Die Anpasssequenz beginnt mit dem Funktionsblock 31 Start. Zunächst wird ein Iterationszähler I auf den Wert 0 gesetzt 32. Anschließend wird ein Anfangswert für die modulierte Magnetfeldstärke festgelegt 33. Dies kann beispielsweise darüber erfolgen, dass in das Impedanzregister für die modulierte Magnetfeldstärke 5 wie bei der Ausführungsform nach Fig. 1 geschrieben wird. Der Anfangswert kann als Vorgabewert zum Steuern der modulierten Magnetfeldstärke aufgefasst werden. Anschließend wird der Iterationszähler erhöht 34. Für ein Zeitintervall wird dann das Hochfrequenzmagnetfeld mit der unmodulierten Magnetfeldstärke a erzeugt. Mittels einer Empfangsantenne wird das durch das Hochfrequenzmagnetfeld induzierte Hochfrequenzmagnetfeldsignal empfangen 36. Hieraus wird ein die empfangene unmodulierte Magnetfeldstärke a repräsentierender Wert $a_{gemessen}$ ermittelt 37. Anschließend wird das Magnetfeld mit der modulierten Magnetfeldstärke b erzeugt 38. Erneut wird mit der Empfangsantenne das nun modulierte Hochfrequenzmagnetfeldsignal empfangen 39. Hieraus wird ein weiterer die modulierte Magnetfeldstärke b repräsentierender Wert $b_{gemessen}$ ermittelt 40. Anschließend wird der Modulationsindex $m = (a_{gemessen} - b_{gemessen})/(a_{gemessen} + b_{gemessen})$ bestimmt 41. Anschließend wird der gemessene Modulationsindex $m_{gemessen}$ mit dem Vorgabewert des Modulationsindex $m_{vorgabe}$ verglichen 42. In einer Abfrage 43 wird geprüft, ob der gemessene Modulationsindex innerhalb eines Toleranzbereichs liegt, der durch die Toleranzgrenzwerte $\delta t_2$ und $\delta t_1$ festgelegt ist, d.h. ob der gemessene Modulationsindex in einem Intervall zwischen $m_{vorgabe} - \delta t_2$, und $m_{vorgabe} + \delta t_1$, liegt. Ist dies der Fall, so wird die Anpassungssequenz beendet 44. Liegt der gemessene Modulationsindex nicht in dem vorgegebenen Toleranzbereich, so wird in der Abfrage 45 geprüft, ob der gemessene Modulationsindex größer als der vorgegebene Modulationsindex plus einer ersten Toleranzgrenze $\delta t_1$ ist 46. Ist dies der Fall, so wird der Vorgabewert für die Steuerung der modulierten Magnetfeldstärke erhöht, d.h. eine Ausgangsimpedanz abgesenkt 47. Anschließend wird in einer Abfrage 48 geprüft, ob eine maximale Iterationszahl erreicht ist. Ist dies der Fall, so wird das Anpassverfahren beendet 44. Andernfalls wird das Verfahren ab dem Schritt Erhöhen der Iterationszahl 34 erneut durchlaufen.

Wird bei der Abfrage, ob der gemessene Modulationsindex größer als der Vorgabewert zuzüglich der ersten $\delta t_1$ Toleranzgrenze ist 46, festgestellt, dass dies nicht der Fall ist, so wird in einer Abfrage 49 geprüft, ob der gemessene Modulationsindex kleiner als der Vorgabewert abzüglich einer zweiten Toleranzgrenze $\delta t_2$ ist 49. Dieser Verfahrensschritt ist nur zur besseren Übersichtlichkeit eingefügt und kann in einem realen Verfahren ausgelassen werden. Ist dieses der Fall, so wird der Vorgabewert für die Steuerung der modulierten Magnetfeldstärke verringert, d.h. der Ausgangswiderstand der Treibereinheit 8 nach Fig. 1 erhöht 50. Anschließend wird das Verfahren mit der Abfrage 48 fortgesetzt, ob eine maximale Iterationszahl erreicht ist.

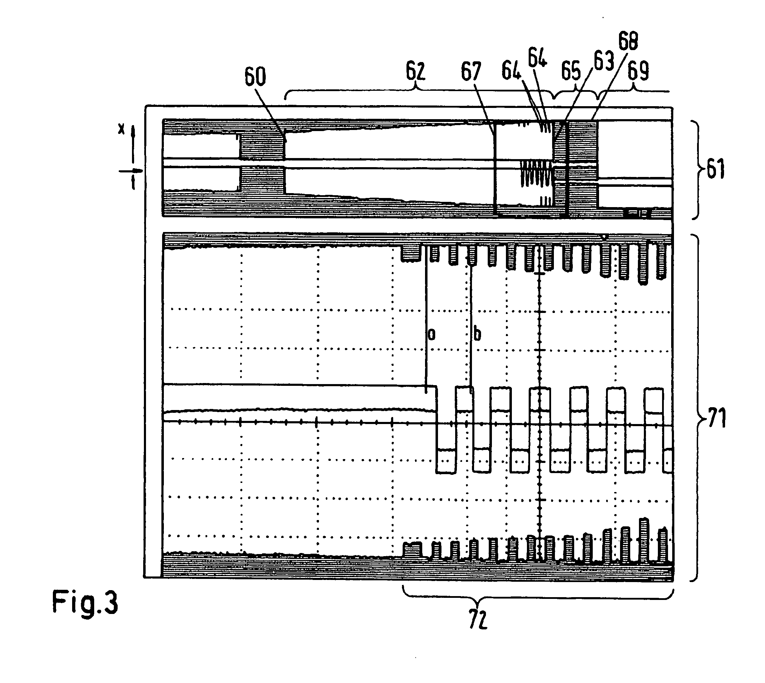

In Fig. 3 ist eine Ansicht eines Oszillografen gezeigt, mit dem das empfangene Hochfrequenzmagnetfeldsignal 60 gegen die Zeit grafisch dargestellt ist. In einem kleinen Übersichtfenster 61 ist eine Pollingsequenz 62 zu erkennen. Während der Pollingsequenz 62 werden die Umfeldbedingungen verändert, so dass eine Magnetfeldstärke x mit der Zeit t zunimmt. Hierdurch kann man erkennen, dass sich die Magnetfeldstärke abhängig von Umfeldbedingungen im Nahbereich des Kartenlesegeräts verändern kann. Die einzelnen Schwingungen des Hochfrequenzmagnetfelds werden nicht aufgelöst. Ebenfalls ist eine stattfindende Signalübertragung von dem Kartenlesegerät zu der kontaktlos auslesbaren Karte nicht erkennbar, da eine zeitliche Dauer der Abschnitte, in denen die Amplitude auf einen modulierten Wert umtastet wird, aufgrund der Umtastfrequenz der Signalübertragung, d.h. einer Signalübertragungsfrequenz, nicht zeitlich aufgelöst werden kann. Am Ende 63 der Pollingsequenz 62 sind jedoch "Einkerbungen" 64 in einer Einhüllenden des empfangenen Hochfrequenzmagnetfeldsignals 60 zu erkennen, bevor das Hochfrequenzmagnetfeldsignal 60 vollständig für ein Zeitintervall 65 abgeschaltet wird.

Im unteren Teil 71 der Oszillografenansicht ist der durch Klammern 66, 67 beschränkte Bereich des Übersichtsfensters 61 vergrößert dargestellt. Dargestellt ist das Magnetfeldsignal 60 während einer Anpasssequenz 72. Gut zu erkennen ist, dass die Magnetfeldstärke iterativ zwischen der unmodulierten Magnetfeldstärke a und der modulierten Magnetfeldstärke b umgetastet wird. Dies erfolgt mit einer Anpasssequenzumtastfrequenz. Diese ist sehr viel geringer als die Signalübertragungssequenz, so dass die Umtastungen der Anpasssequenz 72 zeitlich aufgelöst darstellbar sind. Gut zu erkennen ist, dass die modulierte Magnetfeldstärke schrittweise abgesenkt wird, so dass der Modulationsindex ansteigt. Nachdem in einem vorletzten Umtastschritt der gewünschte Modulationsindex überschritten ist, wird die modulierte Magnetfeldstärke erneut leicht angehoben. Nun ist der gemessene Modulationsindex $m_{gemessen}$ im Toleranzbereich um den Vorgabewert des Modulationsindexes $m_{Vorgabe}$. Anschließend wird die Anpasssequenz 72 beendet.

Die Anpasssequenz kann vorteilhafterweise am Ende einer Pollingsequenz 62 ausgeführt werden, indem keine Kommunikation mit einer kontaktlos auslesbaren Karte im Nahbereich des Kartenlesegeräts hergestellt werden konnte. Hierdurch wird sichergestellt, dass zu Beginn einer nachfolgenden Pollingsequenz 69 (vergleiche Übersichtsfenster 61 von Fig. 3) die Chancen für eine erfolgreiche Kommunikationsaufnahme verbessert sind. Ebenso kann es vorteilhaft sein, eine solche Anpasssequenz 72 im Verlaufe einer Kommunikation durchzuführen, in der beispielsweise zwischen Informationsaustauschsequenzen zeitliche Zwischenräume entstehen, in denen beispielsweise das Kartenlesegerät eingelesene Informationen auf höherer Ebene im OSI Modell verarbeitet oder auf Informationen einer externen Quelle wartet, bevor weitere Daten aus der kontaktlos auslesbaren Karte ausgelesen werden sollen.

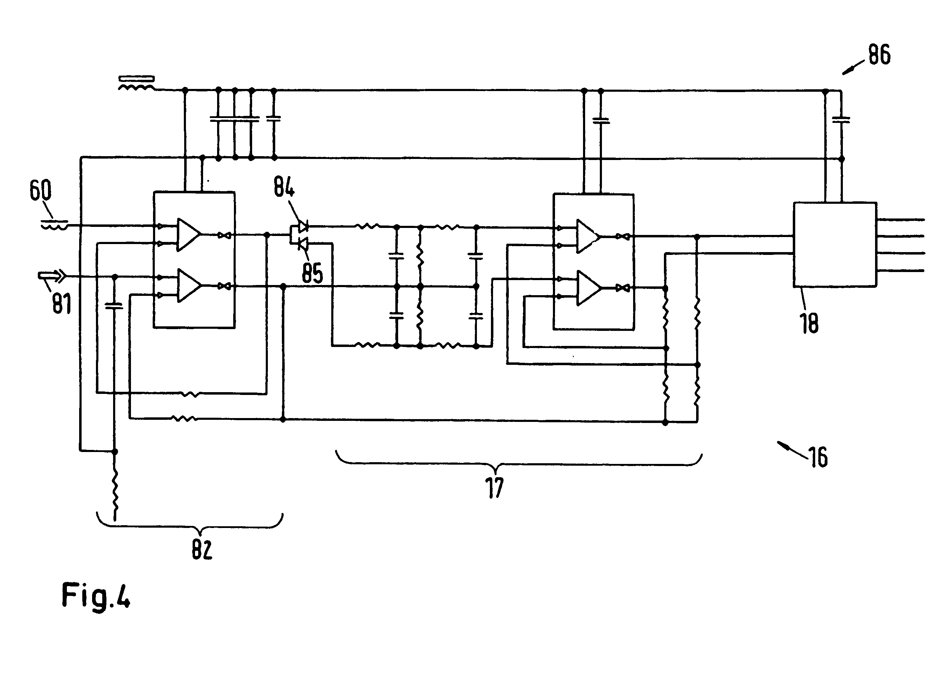

In Fig. 4 ist eine beispielhafte Messschaltung schematisch dargestellt. Das empfangene Hochfrequenzmagnetfeldsignal 60 wird zusammen mit einem Referenzpotenzial 81 in eine Vorverstärkereinheit 82 eingespeist. Anschließend werden die positive und negative Halbwelle des Hochfrequenzmagnetfeldsignals an Dioden 84, 85 getrennt. Eine Detektionsschaltung 17 ist als integrierender Tiefpass ausgebildet. Das Signal der Detektionsschaltung wird dann anschließend auf einen Analog-Digitalwandler 18 gegeben, der die so ermittelten Werte an die Steuereinheit weitergibt. Dadurch, dass die positiven und negativen Halbwellen getrennt ausgewertet werden, kann die Amplitude zuverlässig bestimmt werden, unabhängig davon, ob das Referenzpotenzial mit dem Potenzialwert übereinstimmt, um den das Hochfrequenzmagnetfeldsignal 60 periodisch symmetrisch oszilliert. Im oberen Bereich von Fig. 4 ist eine Stromversorgung 86 angedeutet.

Es versteht sich für Fachmann, dass nur beispielhafte Ausführungsformen beschrieben sind. Sowohl hinsichtlich der Hardware als auch hinsichtlich der Reihenfolge der Verfahrensschritte sind Abweichungen möglich.

Bezugszeichenliste

| | |
|---|---|
| 1 | Kartenlesegerät |
| 2 | Steuereinheit |
| 3 | Sendeeinheit |
| 4 | Modulationseinheit |
| 5 | Impedanzregister für die modulierte Magnetfeldstärke |
| 6 | Impedanzregister für die unmodulierte Magnetfeldstärke |
| 7 | Ausgangsimpedanzregister |
| 8 | Treibereinheit |
| 9 | Oszillator |
| 10 | Filtereinheit |
| 11 | Sendeantenne |
| 12 | Auswerteeinheit |
| 13 | Empfangsantenne |
| 14 | Aufbereitungsschaltung |
| 15 | Demodulationseinheit |
| 16 | Messschaltung |
| 17 | Detektionsschaltung |
| 18 | A/D-Wandler |
| 19 | Schnittstelle |
| 20 | integrierter Chip |
| 31-50 | Verfahrensschritte |
| 60 | Hochfrequenzmagnetfeldsignal |
| 61 | Übersichtsfenster |
| 62 | Pollingsequenz |
| 63 | Ende |
| 64 | Einkerbungen |
| 65 | Zeitintervall |
| 66, 67 | Klammer |
| 69 | nachfolgende Pollingsequenz |
| 71 | unterer Teil |
| 72 | Anpasssequenz |
| 81 | Referenzpotenzial |
| 82 | Vorverstärkereinheit |
| 84, 85 | Dioden |
| 86 | Stromversorgung |

**Patentansprüche**

1. Verfahren zum Betreiben eines Kartenlesegeräts (PCD) (1) umfassend die Schritte,:

   Erzeugen eines Hochfrequenzmagnetfelds in einem Nahbereich des Kartenlesegeräts (PCD) (1), wobei eine Magnetfeldstärke des Hochfrequenzmagnetfelds gesteuert wird, um eine Kommunikation mit einer kontaktlos auslesbaren Karte (PICC) auszuführen, und wobei bei einer Informationsübertragung von dem Kartenlesegerät (PCD) (1) zu einer in dem Nahbereich befindlichen kontaktlos auslesbaren Karte (PICC) eine Amplitudenumtastmodulation zwischen zwei von Null verschiedenen Magnetfeldstärken, einer unmodulierten Magnetfeldstärke a und einer modulierten Magnetfeldstärke b, ausgeführt wird;
   Auswerten des Hochfrequenzmagnetfelds, um eine Variation des Hochfrequenzmagnetfelds durch eine in dem Nahbereich befindliche kontaktlos auslesbare Karte (PICC) zu erfassen und zu analysieren, wobei zum Auswerten des Hochfrequenzmagnetfelds mit einer von einer verwendeten Sendeinduktion oder Sendeantenne verschiedenen Empfangsinduktion oder Empfangsantenne ein Hochfrequenzmagnetfeldsignal empfangen wird und ein Modulationsindex $m_{gemessen}$ ermittelt wird, wobei der Modulationsindex m als Quotient der Differenz der unmodulierten Magnetfeldstärke a und der modulierten Magnetfeldstärke b und der Summe dieser beiden Magnetfeldstärken a, b gebildet ist (m = (a - b)/(a + b)), und der ermittelten Modulationsindexes $m_{gemessen}$ mit einem vorgegebenen Modulationsindex $m_{Vorgabe}$ verglichen wird und die Magnetfeldstärken beim Steuern der Erzeugung des Hochfrequenzmagnetfelds angepasst werden, um den ermittelten Modulationsindex $m_{gemessen}$ an den vorgegebenen Modulationsindex $m_{Vorgabe}$ anzunähern, **dadurch gekennzeichnet, dass** eine gesonderte Anpasssequenz (72) ausgeführt wird, in der gesteuert iterativ zwischen der unmodulierten Magnetfeldstärke a und der modulierten Magnetfeldstärke b umgetastet wird und die modulierte Magnetfeldstärke und/oder die unmodulierte Magnetfeldstärke jeweils abhängig von dem Vergleich des ermittelten Modulationsindexes $m_{gemessen}$ mit dem vorgegebenen Modulationsindex $m_{Vorgabe}$ variiert werden, um die Annäherung des ermittelten Modulationsindexes $m_{gemessen}$ an den vorgegebenen Modulationsindex $m_{Vorgabe}$ zu bewirken.

2. Verfahren nach Anspruch 1, **dadurch gekennzeichnet, dass** eine Auswertung und Nachregelung des Hochfrequenzmagnetfelds zur Anpassung des ermittelten Modulationsindex $m_{gemessen}$ an den vorgegebenen Modulationsindex vor einem Abschalten des Hochfrequenzmagnetfelds am Ende einer erfolglosen Pollingsequenz (62) oder einem Abschalten des Hochfrequenzmagnetfeldes vorgenommen wird.

3. Verfahren nach einem der vorangegangenen Ansprüche, **dadurch gekennzeichnet, dass** die Anpasssequenz beendet wird, wenn eine Abweichung des ermittelten Modulationsindexes $m_{gemessen}$ von dem vorgegebenen Modulationsindex $m_{Vorgabe}$ in einem Toleranzbereich liegt oder eine vorgegebene Anzahl von Iterationen ausgeführt ist.

4. Verfahren nach einem der vorangegangenen Ansprüche, **dadurch gekennzeichnet, dass** die iterative Umtastung zwischen der unmodulierten Magnetfeldstärke a und der modulierten Magnetfeldstärke b während der Anpasssequenz (72) mit einer Anpasssequenzumtastfrequenz erfolgt, die von einer Frequenz abweicht, vorzugsweise um mindestens eine Größenordnung abweicht, die bei einer Umtastung zur Informationsübertragung zwischen dem Kartenlesegerät (1) und der kontaktlos auslesbaren Karte (PICC) verwendet wird.

5. Verfahren nach einem der vorangegangenen Ansprüche, **dadurch gekennzeichnet, dass** die Anpasssequenz (72) während einer Übertragung von Informationen zwischen dem Kartenlesegerät (1) und der kontaktlos auslesbaren Karte (PICC) in Übertragungspausen ausgeführt wird.

6. Verfahren nach einem der vorangegangenen Ansprüche, **dadurch gekennzeichnet, dass** Werte $a_{gemessen}, b_{gemessen}$, die eine empfangene unmodulierte Magnetfeldstärke und eine empfangene modulierte Magnetfeldstärke repräsentieren, zur Berechnung des gemessenen Modulationsindexes $m_{gemessen}$ mittels einer Detektionsschaltung (17) ermittelt werden, wobei die Detektionsschaltung (17) die die Magnetfeldstärken repräsentierende Werte $a_{gemessen}, b_{gemessen}$ aus dem empfangenen Hochfrequenzmagnetfeldsignal (60) bestimmt, so dass diese eine zeitlich gemittelte Magnetfeldstärke repräsentieren.

7. Verfahren nach einem der vorangegangenen Ansprüche, wobei die Anpasssequenz nach einer Prüfung, ob sich die kontaktlos auslesbare Karte (PICC) nach wie vor im Nahbereich befindet , ausgeführt wird, bevor der Informationsaustausch fortgesetzt wird.

8. Kartenlesegerät (1) für ein Kommunizieren mit einer kontaktlos auslesbaren Karte in einem Nahbereich des Kartenlesegeräts (1) umfassend:

   eine steuerbare Sendeeinheit (3) zum Erzeugen eines Hochfrequenzmagnetfelds in einem Nachbereich des Kartenlesegeräts (1), wobei eine Magnetfeldstärke des Hochfrequenzmagnetfelds steuerbar ist, um eine Kommunikation mit der kontaktlos auslesbaren Karte (PICC) auszuführen, und wobei die Sendeeinheit (3) ausgebildet ist, für eine Informationsübertragung von dem Kartenlesegerät (1) zu einer in dem Nahbereich befindlichen kontaktlos auslesbaren Karte (PICC) eine Amplitudenumtastmodulation zwischen zwei von Null verschiedenen Magnetfeldstärken, einer unmodulierten Magnetfeldstärke a und einem modulierten Magnetfeldstärke b, auszuführen;
   und eine Auswerteeinheit (12) zum Auswerten des Hochfrequenzmagnetfelds, um eine Variation des Magnetfelds durch eine in dem Nahbereich befindliche kontaktlos auslesbare Karte (PICC) zu erfassen und zu analysieren, wobei eine von einer zum Erzeugen des Hochfrequenzmagnetfels verwendeten Sendeantenne (11) oder Sendeinduktion verschiedene Empfangsantennen (13) oder Empfangsinduktion zum Empfangen eines Hochfrequenzmagnetfeldsignals mit der Auswerteeinheit verknüpft ist, und die Auswerteeinheit eine Detektionsschaltung umfasst, die eine empfangene Magnetfeldstärke ermittelt und einer Steuereinheit (2) zuführt, die ausgebildet ist, einen Modulationsindex $m_{gemessen}$ zu ermitteln, wobei der Modulationsindex m der als Quotient der Differenz der unmodulierten Magnetfeldstärke a und der modulierten Magnetfeldstärke b und der Summe diese beiden Magnetfeldstärke a, b definiert ist ($m = (a-b)/(a+b)$), und den ermittelten Modulationsindex $m_{gemessen}$ mit einem vorgegebenen Modulationsindex $m_{Vorgabe}$ zu vergleichen und die Sendeeinheit (3) anzusteuern, um den ermittelten Modulationsindex $m_{gemessen}$ an den vorgegebenen Modulationsindex $m_{Vorgabe}$ anzunähern, **dadurch gekennzeichnet, dass** die Steuereinheit (2) ausgebildet ist, eine gesonderte Anpasssequenz (72) auszuführen, in der die Amplitude des Magnetfelds iterativ zwischen der unmodulierten Magnetfeldstärke a und der modulierten Magnetfeldstärke b umgetastet wird und die modulierte Magnetfeldstärke b und/oder die unmodulierte Magnetfeldstärke a jeweils abhängig von dem Vergleich des ermittelten Modulationsindexes $m_{gemessen}$ mit dem vorgegebenen Modulationsindex $m_{Vorgabe}$ variiert werden, um die Annäherung des ermittelten Modulationsindexes $m_{gemessen}$ an den vorgegebenen Modulationsindex $m_{Vorgabe}$ zu bewirken.

9. Kartenlesegerät (1) nach Anspruch 8, **dadurch gekennzeichnet, dass** die Steuereinheit (2) ausgebildet ist, eine Auswertung und Anpassung der Steuerung zur Anpassung des ermittelten Modulationsindex $m_{gemessen}$ an den vorgegebenen Modulationsindex $m_{Vorgabe}$ vor einem Abschalten des Hochfrequenzmagnetfelds, insbesondere am Ende einer erfolglosen Pollingsequenz (62), vorzunehmen.

10. Kartenlesegerät (1) nach Anspruch 8 oder 9, **dadurch gekennzeichnet, dass** die Steuereinheit (2) ausgebildet ist, die Anpasssequenz (72) zu beenden, wenn eine Abweichung des ermittelten Modulationsindexes $m_{gemessen}$ von dem vorgegebenen Modulationsindex $m_{Vorgabe}$ in einem Toleranzbereich um den vorgegebenen Modulationsindex $m_{Vorgabe}$ liegt oder eine vorgegebene Anzahl von Iterationen ausgeführt ist.

11. Kartenlesegerät (1) nach einem der Ansprüche 8 bis 10, **dadurch gekennzeichnet, dass** die Steuereinheit (2) ausgebildet ist, die iterative Umtastung zwischen der unmodulierten Magnetfeldstärke a und der modulierten Magnetfeldstärke b während der Anpasssequenz (72) mit einer Anpasssequenzumtastfrequenz zu steuern, die von einer Frequenz abweicht, vorzugsweise um mindestens eine Größenordnung abweicht, die bei einer Umtastung zur Informationsübertragung zwischen dem Kartenlesegerät (1) und der kontaktlos lauslesbaren Karte verwendet wird.

12. Kartenlesegerät (1) nach einem der Ansprüche 8 bis 11, **dadurch gekennzeichnet, dass** die Steuereinheit (2) ausgebildet ist, die Anpasssequenz während einer Übertragung von Informationen zwischen dem Kartenlesegerät (1) und der kontaktlos auslesbaren Karte in Übertragungspausen auszuführen.

13. Kartenlesegerät (1) nach einem der Ansprüche 8 bis 12, **dadurch gekennzeichnet, dass** die Auswerteeinheit (12) eine Messschaltung (16) zum Ermitteln von die empfangenen Magnetfeldstärken repräsentierenden Werten $a_{gemessen}$, $b_{gemessen}$ zur Berechnung des gemessenen Modulationsindexes $m_{gemessen}$ umfasst, wobei die Messschaltung die die Magnetfeldstärken repräsentierende Werte $a_{gemessen}$, $b_{gemessen}$ aus dem empfangenen Hochfrequenzmagnetfeldsignal (60) bestimmt, so dass diese eine zeitlich gemittelte Magnetfeldstärke repräsentieren.

14. Kartenlesegerät (1) nach einem der Ansprüche 8 bis 13, **dadurch gekennzeichnet, dass** die Messschaltung (16) positive und negative Halbwellen des empfangenen Hochfrequenzmagnetfeldsignals (60) getrennt auswertet.

15. Kartenlesegerät (1) nach einem der Ansprüche 8 bis 14, **dadurch gekennzeichnet, dass** eine Modulationsschaltung der Sendeeinheit (3) mit einer Demodulationsschaltung der Auswerteeinheit (12) in einem integrierten steuerbaren Schaltkreis integriert ist, wobei die erzeugten Magnetfeldstärken über Registerwerte für Ausgangswiderstandswerte steuerbar sind, die über Steuerbefehle der Steuereinheit (2) einstellbar sind.

**Claims**

1. Method for operating a card reader device (PCD) (1) comprising the following steps:

   generating a high-frequency magnetic field in a close range of the card reader device (PCD) (1), wherein a magnetic field strength of the high-frequency magnetic field is controlled to carry out communication with a contactless readable card (PICC), and wherein, during information transmission from the card reader device (PCD) (1) to a contactless readable card (PICC) located in the close range, an amplitude shift modulation is carried out between two magnetic field strengths that differ from zero, an unmodulated magnetic field strength a and a modulated magnetic field strength b;
   evaluating the high-frequency magnetic field in order to capture and analyse a variation of the high-frequency magnetic field by means of a contactless readable card (PICC) located in the close range, wherein, to evaluate the high-frequency magnetic field with a reception induction or reception antenna that is different from a transmission induction or transmission antenna used, a high-frequency magnetic field signal is received and a modulation index $m_{measured}$ is determined, wherein the modulation index m is formed as a ratio of the difference of the unmodulated magnetic field strength a and the modulated magnetic field strength b and of the sum of these two magnetic field strengths a, b (m = (a - b)/(a + b)), and the determined modulation index $m_{measured}$ is compared with a specified modulation index specified and the magnetic field strengths are adapted while controlling the generating of the high-frequency magnetic field, in order to approximate the determined modulation index $m_{measured}$ to the specified modulation index $m_{specified}$, **characterised in that** a separate adaptation sequence (72) is carried out in which iteratively controlled shifting occurs between the unmodulated magnetic field strength a and the modulated magnetic field strength b and the modulated magnetic field strength and/or the unmodulated magnetic field strength are each varied depending on the comparison of the determined modulation index $m_{measured}$ with the specified modulation index $m_{specified}$, in order to effect the approximation of the determined modulation index $m_{measured}$ to the specified modulation index $m_{specified}$.

2. Method according to claim 1, **characterised in that** an evaluation and readjustment of the high-frequency magnetic field for adapting the determined modulation index $m_{measured}$ to the specified modulation index is performed prior to switching off the high-frequency magnetic field at the end of an unsuccessful polling sequence (62) or switching off the high-frequency magnetic field.

3. Method according to any one of the preceding claims, **characterised in that** the adaptation sequence is ended if a deviation of the determined modulation index $m_{measured}$ from the specified modulation index $m_{specified}$ lies in a tolerance range or a specified number iterations is performed.

4. Method according to any one of the preceding claims, **characterised in that** the iterative shifting between the unmodulated magnetic field strength a and the modulated magnetic field strength b during the adaptation sequence (72) is performed with an adaptation sequence shifting frequency which differs from a frequency, preferably by at least one order of magnitude which, during shifting, is used for information transmission between the card reader device (1) and the contactless readable card (PICC).

5. Method according to any one of the preceding claims, **characterised in that** the adaptation sequence (72) during a transmission of information is carried out between the card reader device (1) and the contactless readable card (PICC) in transmission breaks.

6. Method according to any one of the preceding claims, **characterised in that** values $a_{measured}$, $b_{measured}$, which represent a received unmodulated magnetic field strength and a received modulated magnetic field strength, are determined for calculating the measured modulation index $m_{measured}$ by means of a detection circuit (17), wherein the detection circuit (17) determines the values $a_{measured}$, $b_{measured}$, which represent the magnetic field strengths, from the received high-frequency magnetic field signal (60), so that these represent a time-averaged magnetic field strength.

7. Method according to any one of the preceding claims, wherein the adaptation sequence is carried out after checking whether the contactless readable card (PICC) still is located in the close range, before the information exchange is continued.

8. Card reader device (1) for communicating with a contactless readable card in a close range of the card reader device (1), comprising:

a controllable transmission unit (3) for generating a high-frequency magnetic field in a close range of the card reader device (1), wherein a magnetic field strength of the high-frequency magnetic field is controllable, in order to carry out communication with the contactless readable card (PICC), and wherein the transmission unit (3) is designed to carry out, for information transmission from the card reader device (1) to a contactless readable card (PICC) located in the close range, an amplitude shift modulation between two magnetic field strengths that differ from zero, an unmodulated magnetic field strength a and a modulated magnetic field strength b;
and an evaluation unit (12) for evaluating the high-frequency magnetic field, in order to capture and analyse a variation of the magnetic field by means of a contactless readable card (PICC) located in the close range, wherein a reception antenna (13) or reception induction for receiving a high-frequency magnetic field signal, said reception antenna or reception induction differing from a transmission antenna (11) or transmission induction used for generating the high-frequency magnetic field, is linked with the evaluation unit, and the evaluation unit comprises a detection circuit which determines a received magnetic field strength and supplies it to a control unit (2) designed to determine a modulation index $m_{measured}$, wherein the modulation index m is defined as the ratio of the difference of the unmodulated magnetic field strength a and the modulated magnetic field strength b and of the sum of these two magnetic field strengths a, b ($m = (a-b)/(a+b)$), and to compare the determined modulation index $m_{measured}$ with a specified modulation index $m_{specified}$ and to select the transmission unit (3) in order to approximate the determined modulation index $m_{measured}$ to the specified modulation index $m_{specified}$, **characterised in that** the control unit (2) is designed to carry out a separate adaptation sequence (72) in which the amplitude of the magnetic field is iteratively shifted between the unmodulated magnetic field strength a and the modulated magnetic field strength b and the modulated magnetic field strength b and/or the unmodulated magnetic field strength a are each varied depending on the comparison of the determined modulation index $m_{measured}$ with the specified modulation index specified, in order to effect the approximation of the determined modulation index $m_{measured}$ to the specified modulation index $m_{specified}$.

9. Card reader device (1) according to claim 8, **characterised in that** the control unit (2) is designed to perform an evaluation and adaptation of the control for adapting the determined modulation index $m_{measured}$ to the specified modulation index $m_{specified}$ prior to switching off the high-frequency magnetic field, especially at the end of an unsuccessful polling sequence (62).

10. Card reader device (1) according to claim 8 or 9, **characterised in that** the control unit (2) is designed to end the adaptation sequence (72) if a deviation of the determined modulation index $m_{measured}$ from the specified modulation index $m_{specified}$ lies in a tolerance range around the specified modulation index $m_{specified}$ or a specified number of iterations is carried out.

11. Card reader device (1) according to any one of claims 8 to 10, **characterised in that** the control unit (2) is designed to control the iterative shifting between the unmodulated magnetic field strength a and the modulated magnetic field strength b during the adaptation sequence (72) with an adaptation sequence shifting frequency which deviates from a frequency, preferably by at least one order of magnitude, which is used, during shifting, for information transmission between the card reader device (1) and the contactless readable card.

12. Card reader device (1) according to any one of claims 8 to 11, **characterised in that** the control unit (2) is designed to carry out the adaptation sequence during a transmission of information between the card reader device (1) and the contactless readable card in transmission breaks.

13. Card reader device (1) according to any one of claims 8 to 12, **characterised in that** the evaluation unit (12) comprises a measuring circuit (16) for determining values $a_{measured}$, $b_{measured}$, which represent the received magnetic field strengths, for calculating the measured modulation index $m_{measured}$, wherein the measuring circuit determines the values $a_{measured}$, $b_{measured}$, which represent the magnetic field strengths, from the received high-frequency magnetic field signal (60), so that these represent a time-averaged magnetic field strength.

14. Card reader device (1) according to any one of claims 8 to 13, **characterised in that** the measuring circuit (16) separately evaluates positive and negative half-waves of the received high-frequency magnetic field signal (60).

15. Card reader device (1) according to any one of claims 8 to 14, **characterised in that** a modulation circuit of the transmission unit (3) with a demodulation circuit of the evaluation unit (12) is integrated into an integrated controllable circuit, wherein the generated magnetic field strengths can be controlled by means of register values for output resistance values which can be set via control commands of the control unit (2).

**Revendications**

1. Procédé servant à faire fonctionner un appareil de lecture de cartes (PCD) (1), comportant les étapes suivantes consistant à :

   - générer un champ magnétique haute fréquence dans une zone de proximité de l'appareil de lecture de cartes (PCD) (1), sachant qu'une intensité de champ magnétique du champ magnétique haute fréquence est commandée pour établir une communication avec une carte lisible sans contact (PICC) et sachant que dans le cas d'un transfert d'informations de l'appareil de lecture de cartes (PCD) (1) vers une carte lisible sans contact (PICC) se trouvant dans la zone de proximité, une modulation pour la manipulation des amplitudes entre deux intensités de champ magnétique différentes de zéro, une intensité de champ magnétique non modulée a et une intensité de champ magnétique modulée b, est effectuée ;

   évaluer le champ magnétique haute fréquence pour détecter et analyser une variation du champ magnétique haute fréquence par une carte lisible sans contact (PICC) se trouvant dans la zone de proximité, sachant qu'on reçoit un signal de champ magnétique haute fréquence pour évaluer le champ magnétique haute fréquence avec une induction de réception ou une antenne de réception différente d'une induction d'émission ou d'une antenne d'émission utilisée et qu'on détermine un indice de modulation $m_{mesuré}$, sachant que l'indice de modulation m est formé en tant que quotient de la différence entre l'intensité de champ magnétique non modulée a et de l'intensité de champ magnétique modulée b sur la somme des deux intensités de champ magnétique a, b ($m = (a-b)/(a+b)$), et sachant qu'on compare l'indice de modulation déterminé $m_{mesuré}$ à un indice de modulation prédéfini $m_{prédéfini}$ et que les intensités de champ de modulation sont adaptées lors de la commande pour générer le champ magnétique haute fréquence afin de faire approcher l'indice de modulation déterminé $m_{mesuré}$ à l'indice de modulation prédéfini $m_{prédéfini}$, **caractérisé en ce qu'**une séquence d'adaptation (72) séparée est exécutée dans laquelle on procède de manière commandée et de manière itérative à une manipulation entre l'intensité de champ magnétique non modulée à et l'intensité de champ magnétique modulée b et dans laquelle l'intensité de champ magnétique modulée et/ou l'intensité de champ magnétique non modulée varient respectivement en fonction de la comparaison de l'indice de modulation déterminé $m_{mesuré}$ à l'indice de modulation préfédini $m_{prédéfini}$, afin de faire approcher en conséquence l'indice de modulation déterminé $m_{mesuré}$ à l'indice de modulation prédéfini $m_{prédéfini}$.

2. Procédé selon la revendication 1, **caractérisé en ce qu'**une évaluation et une régulation ultérieure du champ magnétique haute fréquence sont effectuées afin d'adapter l'indice de modulation déterminé $m_{mesuré}$ à l'indice de modulation prédéfini avec une mise hors service du champ magnétique haute fréquence à l'issue d'une séquence d'interrogation (62) ayant échoué ou avant une mise hors service du champ magnétique haute fréquence.

3. Procédé selon l'une quelconque des revendications précédentes, **caractérisé en ce que** la séquence d'adaptation est finie lorsqu'un écart entre l'indice de modulation déterminé $m_{mesuré}$ et l'indice de modulation prédéfini $m_{prédéfini}$ se trouve dans une zone de tolérance ou qu'un nombre prédéfini d'itérations est exécuté.

4. Procédé selon l'une quelconque des revendications précédentes, **caractérisé en ce que** la manipulation itérative entre l'intensité de champ magnétique non modulée a et l'intensité de champ magnétique modulée b est effectuée au cours de la séquence d'adaptation (72) à une fréquence de manipulation de la séquence d'adaptation, laquelle diffère d'une fréquence, de préférence d'une valeur égale au moins à un ordre de grandeur utilisé lors d'une manipulation aux fins du transfert d'informations entre l'appareil de lecture de cartes (1) et la carte lisible sans contact (PICC).

5. Procédé selon l'une quelconque des revendications précédentes, **caractérisé en ce que** la séquence d'adaptation (72) est exécutée au cours d'un transfert d'informations entre l'appareil de lecture de cartes (1) et la carte lisible sans contact (PICC) lors de pauses de transfert.

6. Procédé selon l'une quelconque des revendications précédentes, **caractérisé en ce que** des valeurs $a_{mesurée}$, $b_{mesurée}$, lesquelles représentent une intensité de champ reçue non modulée et une intensité de champ magnétique reçu modulée, sont déterminées aux fins du calcul de l'indice de modulation mesuré $m_{mesuré}$ au moyen d'un circuit de détection (17), sachant que le circuit de détection (17) détermine à partir du signal de champ magnétique haute fréquence (60) reçu les valeurs $a_{mesurée}$, bmesurée représentant les intensités de champ magnétique de sorte que ces dernières représentent une intensité de champ moyenne dans le temps.

7. Procédé selon l'une quelconque des revendications précédentes, sachant que la séquence d'adaptation est exécutée après une vérification consistant à vérifier si la carte lisible sans contact (PICC) se trouve comme avant dans la zone de proximité avant la poursuite de l'échange d'informations.

8. Appareil de lecture de cartes (1) destiné à établir une communication avec une carte lisible sans contact dans une zone de proximité de l'appareil de lecture de cartes (1), comportant :

- une unité d'émission (3) pouvant être commandée servant à générer un champ magnétique haute fréquence dans une zone de proximité de l'appareil de lecture de cartes (1), sachant qu'une intensité de champ magnétique du champ magnétique haute fréquence peut être commandée pour exécuter une communication avec la carte lisible sans contact (PICC) et sachant que l'unité d'émission (3) est configurée pour exécuter pour un transfert d'informations de l'appareil de lecture de cartes (1) vers une carte lisible sans contact (PICC) se trouvant dans la zone de proximité, une modulation pour la manipulation des amplitudes entre deux intensités de champ magnétique différentes de zéro, une intensité de champ magnétique non modulée a et une intensité de champ magnétique modulée b ;

et une unité d'évaluation (12) servant à évaluer le champ magnétique haute fréquence pour déterminer et analyser une variation du champ magnétique par une carte lisible sans contact (PICC) se trouvant dans la zone de proximité, sachant que des antennes de réception (13) ou une induction de réception différentes d'une antenne d'émission (11) ou d'une induction d'émission utilisée pour générer un champ magnétique haute fréquence sont combinées à l'unité d'évaluation afin de recevoir le signal de champ magnétique haute fréquence, et sachant que l'unité d'évaluation comporte un circuit de détection, qui détermine une intensité de champ magnétique reçue et qui mène à une unité de commande (2) configurée pour déterminer un indice de modulation $m_{mesuré}$, sachant que l'indice de modulation m est défini comme le quotient de la différence entre l'intensité de champ magnétique non modulée a et l'intensité de champ magnétique modulée b sur la somme des ces deux intensités de champ magnétique a, b (m=(a-b)/(a+b), pour comparer l'indice de modulation déterminé $m_{mesuré}$ à un indice de modulation predefini $m_{prédéfini}$ et pour commander l'unité d'émission (3) pour faire approcher l'indice de modulation déterminé mmesuré à l'indice de modulation prédéfini $m_{prédéfini}$, **caractérisé en ce que** l'unité de commande (2) est configurée pour exécuter une séquence d'adaptation séparée (72) dans laquelle l'amplitude du champ magnétique est manipulée de manière itérative entre l'intensité de champ magnétique non modulée a et l'intensité de champ magnétique modulée b et dans laquelle l'intensité de champ magnétique modulée b et/ou l'intensité de champ magnétique non modulée a varient respectivement en fonction de la comparaison de l'indice de modulation déterminé $m_{mesuré}$ à l'indice de modulation predefini $m_{prédéfini}$, pour faire approcher en conséquence l'indice de modulation déterminé $m_{mesuré}$ à l'indice de modulation prédéfini $m_{prédéfini}$.

9. Appareil de lecture de cartes (1) selon la revendication 8, **caractérisé en ce que** l'unité de commande (2) est configurée pour effectuer une évaluation et une adaptation de la commande pour adapter l'indice de modulation déterminé $m_{mesuré}$ à l'indice de modulation predefini $m_{prédéfini}$ avant une mise hors service du champ magnétique haute fréquence, en particulier à la fin d'une séquence d'interrogation (62) ayant échoué.

10. Appareil de lecture de cartes (1) selon la revendication 8 ou 9, **caractérisé en ce que** l'unité de commande (2) est configurée pour mettre fin à la séquence d'adaptation (72) lorsqu'un écart entre l'indice de modulation déterminé $m_{mesuré}$ et l'indice de modulation prédéfini $m_{prédéfini}$ se trouve dans une zone de tolérance à proximité de l'indice de modulation prédéfini $m_{prédéfini}$ ou qu'un nombre prédéfini d'itérations est exécuté.

11. Appareil de lecture de cartes (1) selon l'une quelconque des revendications 8 à 10, **caractérisé en ce que** l'unité de commande (2) est configurée pour commander la manipulation itérative entre l'intensité de champ magnétique non modulée a et l'intensité de champ magnétique modulée b au cours de la séquence d'adaptation (72) à une fréquence de manipulation de la séquence d'adaptation, laquelle diffère d'une fréquence, de préférence d'une valeur égale au moins à un ordre de grandeur utilisé lors d'une manipulation aux fins du transfert d'informations entre l'appareil de lecture de cartes (1) et la carte lisible sans contact.

12. Appareil de lecture de cartes (1) selon l'une quelconque des revendications 8 à 11, **caractérisé en ce que** l'unité de commande (2) est configurée pour exécuter la séquence d'adaptation lors d'un transfert d'informations entre l'appareil de lecture de cartes (1) et la carte lisible sans contact lors de pauses de transfert.

13. Appareil de lecture de cartes (1) selon l'une quelconque des revendications 8 à 12, **caractérisé en ce que** l'unité d'évaluation (12) comporte un circuit de mesure (16) servant à déterminer des valeurs $a_{mesurée}$, $b_{mesurée}$ représentant les intensités de champ magnétique reçues pour calculer l'indice de modulation mesuré $m_{mesuré}$, sachant que le circuit de mesure détermine à partir du signal de champ magnétique haute fréquence reçu (60) les valeurs $a_{mesurée}$, bmesurée représentant les intensités de champ magnétique de sorte que ces dernières représentent une intensité de champ magnétique moyenne dans le temps.

14. Appareil de lecture de cartes (1) selon l'une quelconque des revendications 8 à 13, **caractérisé en ce que** le circuit de mesure (16) évalue de manière séparée des demi-ondes positives et négatives du signal de champ magnétique haute fréquence reçu (60).

15. Appareil de lecture de cartes (1) selon l'une quelconque des revendications 8 à 14, **caractérisé en ce qu'**un circuit de modulation de l'unité d'émission (3) est intégrés avec un circuit de démodulation de l'unité d'évaluation (12) dans un circuit de commutation intégré pouvant être commandé, sachant que les intensités de champ magnétique générées peuvent être commandées au-dessus de valeurs de registre pour les valeurs de résistance de sortie, qui peuvent être ajustées sur instructions de l'unité de commande (2).

EP 2 399 221 B1

**Fig.1**

Start —31

Setze Iterationszähler = 0 —32

Lege Ausgangswert für modulierte Magnetfeldstärke fest —33

Ende ←jo— $I > I_{Max}$ —48

nein

44 $I = I+1$ —34

Erzeuge Hochfrequenzmagnetfeld mit unmodulierter Magnetfeldstärke —35

Empfangen eines Hochfrequenzmagnetfeldsignals mit einer Empfangsantenne —36

Ermittele unmodulierte Magnetfeldstärke $o_{gemessen}$ —37

Erzeuge Hochfrequenzmagnetfeld mit modulierter Magnetfeldstärke —38

Empfangen des Hochfrequenzmagnetfeldsignals mit der Empfangsantenne —39

Ermittele modulierte Magnetfeldstärke $b_{gemessen}$ —40

Errechne Modulationsindex $m_{gemessen} = (o_{gemessen} - b_{gemessen})/(o_{gemessen} + b_{gemessen})$ —41

Vergleiche ermittelten Modulationsindex $m_{gemessen}$ mit Vorgabewert $m_{Vorgabe}$ —42

43

$m_{Vorgabe} - \delta t_2 < m_{gemessen} < m_{Vorgabe} + \delta t_1$ —jo

nein

Erhöhe Vorgabewert für modulierte Magnetfeldstärke ←jo— $m_{gemessen} > m_{Vorgabe} + \delta t_1$

47

nein 46

Senke Vorgabewert für modulierte Magnetfeldstärke ←jo— $m_{Vorgabe} - \delta t_2 > m_{gemessen}$

49

Ende —44

Fig.2 50

Fig.3

EP 2 399 221 B1

19

Fig.4

EP 2 399 221 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1978665 A2
- EP 1717964 A2